# EUROPEAN PATENT SPECIFICATION

(11) **EP 2 338 353 B1**
(45) Date of publication and mention of the grant of the patent: **05.06.2019**
(21) Application number: 09179654.0
(22) Date of filing: 17.12.2009
(51) Int. Cl.: A23C 19/16, A01J 25/16, A01J 27/02, B65D 85/76

(54) **Method for ripening a cheese in the presence of a frame**
Verfahren zur Reifung eines Käses innerhalb eines Rahmens
Procédé de maturation d'un fromage en présence d'un cadre

(43) Date of publication of application: 29.06.2011
(73) Proprietor: CSK Food Enrichment B.V., 8938 AS Leeuwarden (NL)
(72) Inventor: Haarman, Martinus Gerardus Maria, 9035 VC Dronrijp (NL); Koopmans, Wieger Jan, 8911 ET Leeuwarden (NL); Meijer, Willem Cornelis, 6712 HA Ede (NL); Kevelam, Jan, 6718 HR Ede (NL)
(74) Representative: Nederlandsch Octrooibureau

(56) References cited:
- WO-A2-2009/047332
- FR-A1- 2 600 310
- GB-A- 2 291 407

## Description

### Field of the invention

The present invention relates to a method for foil-ripening a cheese and to a (foil-packaged) cheese obtainable by such method.

### Background of the invention

Methods for foil-ripening a cheese are known in the art. According to a conventional process for providing a "foil-ripened" or "rindless" cheese, a freshly brined cheese block is packaged into a closed water-impermeable multilayer foil and is then ripened, usually by storage at 7-18 °C during at least 4 weeks. An advantage of the known foil ripening process relates to favourable logistics aspects of the ripening stage. During ripening, the packaged cheese blocks are commonly stacked in layers. Herein, each layer comprises several foil-packaged cheeses which are in close (lateral) contact with each other. The entire stack is tightly surrounded by a crate or the like. After a desired ripening time has been obtained, the foil-packaged cheeses are removed from the stack. The foil can then removed from the ripened cheeses and the resulting cheese blocks can be conveniently sliced or cut before consumption and/or transportation. Another advantage of the traditional method for preparing foil-ripened cheese is that the cheese does not lose moisture during ripening. This is because the (multilayer) foil in which it is packaged during ripening is essentially impermeable to water vapour. GB2291407A discloses a cheese container to alleviate a maturing cheese from deforming.

In order to provide ripened cheese which corresponds more to "natural ripened" cheese, WO2009047332 discloses a process for preparing foil-ripened cheese comprising ripening a cheese after brining in a cheese-aging packaging comprising a thermoplastic, monolithic film. The closed cheese-aging packaging has a water vapour transmission rate of at least 10 g/m²/24 hours (measured according to ASTM E96B cup test at 10 °C and 85% relative humidity on a film) and an oxygen permeability of at most 100 cm³/m².24 hours.atm (measured according to ASTM standard D3985 at 10 °C and 85% relative humidity on a film using Mocon equipment).

### Summary of the invention

A disadvantage of traditional foil-ripening may be that the development of a typical cheese flavour and consistency may lag, especially as compared with the characteristics of a "natural ripened" (coated) cheese such as described in for example EP1537785.

In the process according to WO2009047332, the cheeses are preferably not stacked during ripening as in the traditional foil-ripening process. In a stacked arrangement, moisture will not evaporate from each foil-packaged cheese (at least to a comparable degree amongst different cheeses). Instead it is preferred that in the process of WO2009047332, during ripening at least part (preferably at least 25%, more preferably at least 40%, most preferably at least 60%) of the surface of the foil-packaged cheese is exposed to an atmosphere having a relative humidity of less than 100%. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

However, it has been observed that under conditions of "individual ripening" of foil-packaged cheeses, the cheeses tend to lose their original shape in time. In particular, they tend to flatten in a direction parallel to the force of gravity, and to expand in a direction perpendicular to the force of gravity. This shape loss, which increases with increasing ripening time, is highly undesirable since many industrial apparati, forms of packaging etc. used in cutting, slicing and/or packaging the foil-ripened cheese, rely on standardised dimensions thereof which need to be met within tight limits. Furthermore, said shape loss of the cheese may generally lead to unwanted cheese loss occurring during cutting or slicing of the cheese.

In order to obviate the disadvantage of the process according to WO2009047322 and/or to at least diminish shape-loss of foil-packaged cheese during (individual) ripening, the present invention provides a method for foil-ripening a cheese selected from the group consisting of Gouda, Edam, Tilsit, Gruyère, Cheddar, Emmental and Maasdam comprising:
a. providing a cheese having an edge, a first face and a second face;
b. packaging said cheese in a closed cheese-ripening foil having a water vapour transmission rate of at least 5 g/(m².24 hours) at 12 °C and 85% relative humidity; and
c. ripening this foil-packaged cheese in the presence of a frame which surrounds at least part of the edge of said cheese, wherein during ripening moisture is allowed to evaporate from said cheese, wherein the cheese has a fat content of 30 wt.% or less relative to the dry weight of the cheese.

The water vapour transmission rate of the cheese-ripening foil is preferably measured according to ASTM E96B cup test at 12 °C and against 85% relative humidity (the relative humidity within the cup is 100%).

In an embodiment, the cheese has a flat-cylindrical shape which may correspond to that of a (Gouda) cheese wheel. More preferably, the cheese is an essentially block shaped cheese. It is further preferred that the block-shaped cheese has a length (L), a width (b) and a height (h), the height preferably being smaller than the length and the width. Then, the dimensions of each of the first face and the second face are essentially provided by the length and the width of said cheese, and the edge is essentially described by the remaining surface area residing in between the first and the second face. In a further preferred example of an essentially block-shaped cheese, length L = 20-40 cm, width b = 20-70 cm and height h = 5-15 cm. The essentially block-shaped cheese is preferably a so-called Euroblock-cheese, having approximate dimensions length L = 30 cm, width b = 50 cm, height h = 10 cm.

The invention also provides a foil-packaged cheese (of which the edge is) at least partially surrounded by a frame, wherein the foil has a water vapour transmission rate of at least 5 g/(m².24 hours) at 12 °C and 85% relative humidity. It is preferred that said foil-packaged cheese is obtainable according to the method of the invention. The invention also provides the cheese *per se*, obtainable after the method of foil-ripening.

### Detailed description of the invention

### Description of the figure

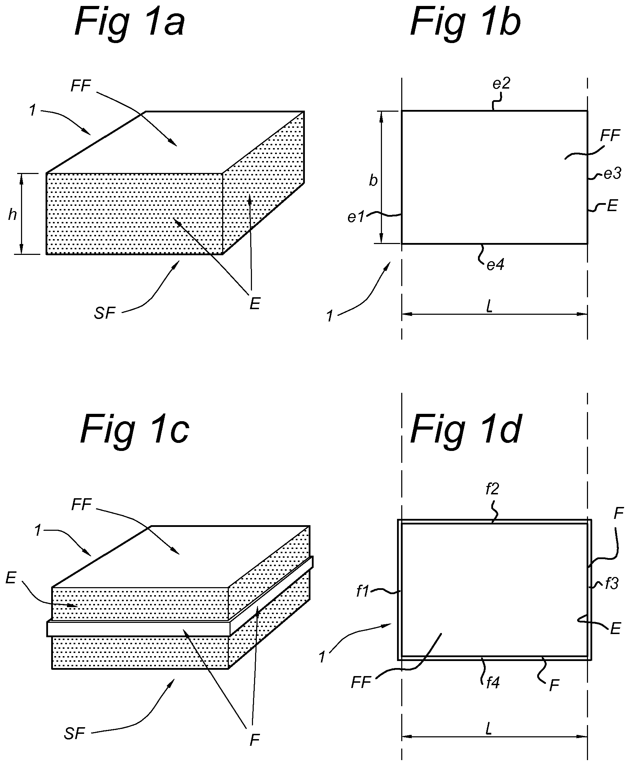

Figure 1a illustrates an example of an essentially block shaped foil-packaged cheese in perspective view (top left) The cheese (indicated with reference 1) resides with its second face (SF) on an imaginary horizontal surface. Its first face (FF) faces upwards.

The visible part of the edge (E) is shown in a dotted pattern. The height of the cheese 1 is indicated with reference h.

Figure 1b shows the same block-shaped foil-packaged cheese in top view. Joint line pieces e1+e2+e3+e4 form the top view projection of the edge E of the (foil-packaged) cheese 1. Line pieces e2 and e4 have outer dimensions L (length); line pieces e1 and e3 have outer dimensions b (width).

Figure 1c illustrates an example of the essentially block-shaped foil-packaged cheese, now surrounded by a frame in perspective view. The frame (F) surrounds the edge E of the foil-packaged cheese, partly covering it. Hence, the frame surrounds at least part of the (foil-packaged) cheese.

Figure 1d provides a top view of the essentially block-shaped foil-packaged cheese surrounded by the frame (F). Joint line pieces f1+f2+f3+f4 form the top view projection of the frame surrounding the cheese 1. As shown by the dotted lines, the inner dimensions of the frame (F) match the outer dimensions of the edge (E).

In the schematic drawings of figure 1c and 1d, the frame F surrounds (or is extending over) the total length of the edge E (i.e. edges e1, e2, e3 and e4, thus 2 x L + 2 x b), but the height of the frame is smaller than the height h of the edge E. The total length of the edge E is herein also indicated as circumferential length.

Embodiments of the invention will be described, by way of example only, with reference to the accompanying schematic drawings in which corresponding reference symbols indicate corresponding parts, as indicated above. The drawings may not be drawn to scale. The invention is not limited to the embodiments schematically depicted in the drawings. For instance, the cheese 1 may also have a cylindrical shape.

### Definitions

The verb "to comprise" as is used in this description and in the claims, and its conjugations, is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The cheese-ripening foil. Preferably, the cheese-ripening foil is provided as a monolithic film. The monolithic film may be provided as a single layer foil or as a multilayer foil. As used herein, a monolithic film is a film not containing holes, perforations, pores or micro-pores that provide a direct pathway for water molecules to flow through. The monolithic film is in an embodiment preferably defined as in WO2009047332. However, the cheese-ripening film may also be provided as a perforated or (micro-) porous film or as a multilayer foil wherein optionally one or more of the layers are present as a perforated or (micro)porous film. Herein, the terms "perforated film" and "microporous film" are considered clear to the skilled person; these terms are preferably defined as in WO2009047332.

The water vapour transmission rate of the cheese-ripening foil is preferably at least 10 g/(m².24 hours), more preferably at least 15 g/(m².24 hours) at 12 °C and 85% relative humidity. Accordingly, even better flavour and/or texture properties can be obtained. Alternatively or more preferably additionally, the water vapour transmission rate of the cheese-ripening foil is preferably at most 300 g/(m².24 hours), more preferably at most 200 g/(m².24 hours), even more preferably at most 150 g/(m².24 hours) at 12 °C and 85% relative humidity. If the water vapour permeability is too high, efficiency of the cheese making process may be reduced as result of excessive moisture loss during ripening, whilst no noticeable further quality gain of the ripened cheese will be achieved.

In order to be able to function as a packaging, the cheese-ripening foil preferably possesses sufficient mechanical properties such as for example puncture resistance and tear strength. In view of this, the thickness of the cheese-ripening foil is preferably at least 15 µm, more preferably at least 25 µm. The thickness of the cheese-ripening foil is preferably less than 200 µm, more preferably less than 100 µm, most preferably less than 75 µm. If the ripening foil is too thick, sealing may take too much time.

In an embodiment, the cheese-ripening foil has an oxygen transmission rate of at most 100 cm³/m².24 hours.atm, more preferably of at most 50 cm³/m².24 hours.atm, most preferably of at most 20 cm³/m².24 hours.atm. Herein, oxygen transmission rate is preferably measured according to ASTM standard D3985 at 12 °C and 85% relative humidity. Low oxygen permeability is advantageous for preventing mould growth on the surface of the cheese during ripening. Low oxygen permeability values of at most 100 cm³/m².24 hours.atm are preferably obtained when the cheese-ripening foil is provided as a monolithic film. However, low oxygen permeability of the cheese-ripening foil is not an absolute requirement since mould inhibition can also be successfully achieved in many other ways known to the skilled person, for example by treating the cheeses with a (food-grade) fungicide prior to packaging them into the cheese-ripening foil. Therefore, the cheese ripening foil may alternatively have an oxygen transmission rate of 100 cm³/m².24 hours.atm or higher, further in an embodiment preferably between 100 and 10,000 cm³/m².24 hours.atm.

The cheese-ripening foil is preferably embodied as a mono- or multilayer foil comprising a polycondensation polymer. Preferred examples of monolayer cheese-ripening foils are for example provided in Table 1 of WO2009047332 as packaging materials 2 (Akulon®), 3 and 4 (Akulon®/Arnitel® blends) and 5(Arnitel®). However a number of alternative foil materials may be used.

### The cheese

The cheese, which is obtainable according to the method of the invention, is selected from the group consisting of Gouda, Edam, Tilsit, Gruyere, Cheddar, Emmental and Maasdam. According to the invention, the cheese has a relatively low fat content, i.e. a fat content of 30 wt.% or less relative to the dry weight of the cheese. Such a cheese is even more prone to undergoing shape loss during ripening, so that the presence of the frame during ripening is even more beneficial.

In a particular embodiment, the cheese comprises propionibacteria, such as Maasdam or Emmental. This cheese is at least partially ripened at a temperature of between 16-25 °C causing the propionibacteria to produce carbon dioxide at enhanced rates, so as to introduce eyes in the cheese. At these relatively high temperatures, the cheese has an enhanced risk to lose its shape during ripening, so that the presence of the frame during ripening is even more beneficial.

In another embodiment, the cheese, preferably Gouda-type cheese, further comprises a strain of *Lactobacillus helveticus*. Also this cheese is preferably ripened at relatively high temperatures of between 14-25 °C.

After removing the foil and the frame, the cheese preferably comprises a drying rind which is visibly present near one or both of its faces and/or the edge. That is, the cheese preferably comprises an outer rind and an interior cheese mass, wherein the colour of the outer rind associated with the first or the second face is preferably darker than the colour of the interior cheese mass.

### The frame

The frame is preferably made of one or more materials selected from the group consisting of metal, plastic, paper, cardboard and wood. Especially favourably, at least 50 wt.% of the frame is provided as plastic, paper, cardboard or wood. Optionally, the material from which the frame is made contains perforations or holes. Said perforations or holes preferably have a diameter of *ca.* 0.01-50 mm, more preferably of *ca.* 0.1 - 5 mm.

In an embodiment, the frame is connected to or forms part of the (preferably wooden) panel or board on which the cheese resides during ripening.

The frame is preferably externally applied to the foil-packaged cheese as a separate element. However the frame may also form an integral part of the cheese-ripening foil, for example in the form of a reinforcing plastic strip.

If the foil-packaged cheese is provided as an essentially block-shaped cheese, it is preferred that the frame is embodied as a square or rectangular-shaped support material surrounding the edge of the cheese, for example as shown in Figure 1(a-d).

The frame F may surround at least part of the edge (E, see figures 1a-1d) of the cheese. This indicates that the frame may in an embodiment entirely surround the edge, i.e. the circumferential length of the frame (in the embodiment of figure 1d this circumferential length is the length of f1+f2+f3+f4) may substantially be equal to the circumferential length of the edge (where the frame is applied) (in figure 1b this circumferential length of the edge is the length e1+e2+e3+e4). This may in an embodiment also indicate that the frame surrounds a substantial part of the circumferential length of the edge. For instance, the frame may have an opening (for instance a U-shaped frame). The frame, or elements thereof, may also be part of a larger structure. The cheese is preferably surrounded by the frame over at least about 80 % of the total circumferential length of the edge (i.e. at least about 80% of the sum of 2 x L + 2 x b), especially at least about 90%. In a specific embodiment, the frame surrounds the edge over the total circumferential length of the edge (figures 1c and 1d schematically depict such embodiment wherein the cheese is surrounded by the frame over 100 % of the total circumferential length of the edge). The term circumferential length relates to the circumference of a cheese, which may especially have a cylindrical shape or which may in a specific embodiment be essentially block shaped, or which may have another shape.

In an embodiment, the frame may substantially surround the entire height of the edge height (in the embodiment of figure 1a height h), but may in an embodiment also surround only part of the height of the edge, such as for instance schematically depicted in figure 1c, where the height of the frame F is smaller than the height of the edge E. Preferably, the frame is in contact with the edge in the order of 5-100% of the surface of the edge, such as in the range of 10-80%, like 20-50%. In the embodiment wherein the frame is in contact with 100% of the edge, i.e. substantially the whole edge between the first and second surface is in contact with the frame.

In an embodiment, the frame is in contact with part of the first face and/or part of the second surface in the order of not more than about 70% of the total surface area of the first and/or second surfaces, respectively, such as in the range of 0-60%, especially in the range of about 0-10%. Hence, the frame may be in contact with part of the first face and/or part of the second surface.

In a preferred embodiment, the frame comprises elements which are connectable by (releasable) fastening means, such as a belt or a clip. To provide the frame, such elements may be assembled by connecting with the fastening means. Accordingly, the foil-packaged cheese may be surrounded by the frame more easily. With one or more releasable fastening means, the frame can be conveniently removed after the cheese has obtained a desired ripening time. For instance, referring to figure Id, the elements f1, f2, f3 and f4 may be separate elements that are joined together with (releasable) fastening means.

In an embodiment, the frame may be further in contact with the first face and/or the second face of the foil-packaged cheese. Accordingly, the cheese may be even better protected against mechanical damage. It is preferred, however, that the frame does not completely block moisture evaporation from the cheese. This may conveniently achieved for example by ensuring that the surface of the frame being in contact with the edge is in the order of 10-80%, like 20-50%, of the surface of the edge. The frame may be provided with perforations or holes as indicated above. In such embodiment, the edge may be surrounded by the frame over its total circumferential length (and optionally also its total height) whereas the area of the edge being in contact with the frame is (substantially) lower than 100% of the total area of the edge.

The term "surround" and derivatives do include embodiments wherein the foil-packaged cheese has a substantially cylindrical shape, wherein the frame surrounds at least part of the cylindrical edge and embodiments wherein the foil-packaged cheese has a block-shaped shape, wherein the frame surrounds at least part of the rectangular edge of the foil-packaged cheese.

### Ripening conditions

The foil-packaged cheese is preferably ripened under conditions of controlled relative humidity and temperature. The relative humidity preferably ranges between 20-95%. It is especially preferred that the relative humidity ranges between 75 and 90%. Preferably, the air near the foil-packaged cheese is displaced at a rate of 0.01 - 5 m/s, more preferably at a rate of 0.05 - 3 m/s. The temperature preferably ranges between 6-25 °C. In an especially preferred embodiment, the temperature ranges between 11 and 20 °C during ripening. The conditions together with the water vapour transmission rate of the cheese-ripening foil are especially preferably chosen such that during ripening in (c.) the total amount of moisture which is allowed to evaporate from the foil-packaged cheese is 0.5 - 20 wt.%, more preferably 1-15 wt.% relative to the weight of the foil-packaged cheese provided in (b.). The ripening time may be in the range of about 28 days or longer, and in general equal to or less than about 2 years, preferably equal to or less than about 1 year, such as bout 3 months.

Preferably, during ripening, the foil-packaged cheese is allowed to rest on any one of its first or second face. Alternatively or more preferably additionally, during ripening, the foil-packaged cheese is turned upside-down at least once. Accordingly, an even moisture evaporation can be obtained from the first face and the second face. As an additional advantage, for brined cheeses, turning the foil-packaged cheese upside-down at least once will promote an even distribution of the brine within each foil-packaged cheese during ripening. Hence, in a preferred embodiment, the cheeses are individually ripened and are not in contact with other cheeses. It is especially preferred that ripening is realized under conditions wherein each cheese is individually placed on (wooden) shelves and wherein there is essentially no contact between the cheeses. Under these conditions of so-called "individual ripening", adequate moisture evaporation from each cheese can be achieved.

### Further embodiments of the method

After the foil-packaged cheese has been ripened for a desired time, the frame is preferably removed. Alternatively or more preferably additionally, after the foil-packaged cheese has been ripened for a desired time, the cheese-ripening foil is removed.

In case both the frame and the cheese-ripening foil are removed, the "naked" cheese thus obtained is preferably further packaged in an essentially gas- and water-impermeable foil and/or is provided with a layer of a cheese coating or cheese wax. If it is further packaged in an essentially gas- and water-impermeable foil, it may be stored, preferably with cooling to below 7 °C, without further ripening and/or evaporative weight loss to occur. Accordingly, cheese may be stored until necessary and keep its desired "ripening age", which is an important logistical advantage. Similar advantage may be obtained if the naked cheese is provided with a layer of cheese wax, preferably by dipping. If the naked cheese is provided with one or more layers of a water-borne cheese coating composition, which preferably comprises an emulsion (co)polymer, the cheese obtains the appearance of a traditionally natural ripened cheese, which may be advantageous for some applications.

In case both only the frame is removed, the ripened foil-packaged cheese thus obtained may also preferably be further packaged in an essentially gas- and water-impermeable foil or may be provided with a layer of a cheese coating or cheese wax. Comparable advantages may be obtained, especially for further packaging in the essentially gas- and water-impermeable foil or providing the layer of cheese wax.

After removing the foil and the frame, the cheese preferably comprises an outer rind and an interior cheese mass, wherein the colour of the outer rind associated with the first or the second face is darker than the colour of the interior cheese mass. This phenomenon, commonly associated with natural ripened cheeses, is known to the skilled person as a "drying rind".

The cheese provided in (a.) of the method according to the invention and/or the ripened foil-packaged cheese obtainable thereby preferably comprise at least one strain of *Lactococcus lactis* spp. *lactis* and at least one strain of *Lactococcus lactis* spp. *cremoris.* Even more preferably, the cheese further comprises a strain of *Lactococcus lactis* spp. *lactis* biovar. *diacetylactis* and/or a strain of *Leuconostoc.* Accordingly, a semi-hard cheese having a typical Gouda flavour may be favourably obtained.

### EXAMPLES

A block-shaped cheese produced using a so-called LD-starter (*i.e.* comprising one or more strains of each of *Lactococcus lactis* spp. *lactis, Lactococcus lactis* spp. *cremoris, Lactococcus lactis* spp. *lactis* biovar. *diacetylactis* and *Leuconostoc*) was divided in 4 parts each measuring 15cm(w) x 11cm(h) x 25cm(1). The cheese was packaged in a closed cheese-ripening foil made of a commercially available polyester urethane copolymer. Before packaging the cheese in said foil, its surface was treated with an aqueous suspension comprising 500 ppm of natamycin.

The foil had a thickness of 50 µm. The oxygen transmission rate (OTR) of the foil was determined as 750 ml.m⁻².bar⁻¹.24h⁻¹ at 12 °C and 85% relative humidity. The water vapour transmission rate (WVTR) was determined as 18 g.m⁻².24h⁻¹ at 12 °C and against an atmosphere of 85% relative humidity.

OTR was measured according to ASTM standard D3985 using Mocon equipment. WVTR was measured according to the ASTM E96B cup test at 12 °C and against 85% relative humidity (the relative humidity within the cup is 100%).

The cheeses were placed on a wooden shelf, leaving sufficient space (between 10 and 50 cm) between them. The foil-packaged cheeses were allowed to ripen under controlled conditions of 12 °C and 83% relative humidity. After 60 days, the weight loss from the cheeses - due to evaporation of moisture - was on average 4 wt.%. By comparison, similarly sized cheese blocks which were "naturally ripened" during the same period of 60 days and under the same conditions lost approx. 12 wt.% of their original weight; the natural ripening process comprised 15 half-sided treatments with a water-borne cheese-coating composition (Ceska WL) each half-sided treatment followed by turning of the cheese upside-down.

The foil-packaged cheeses were observed to undergo shape-loss in time, especially the cheeses became flattened.

Said shape-loss can be prevented or at least diminished by ripening the foil-packaged cheeses in the presence of a frame. The frame can preferably be made of wood or plastic which may have a thickness of between 1 and 10 mm. The frame has interior dimensions of approx. 15(L)x25(b) cm (rectangular-shaped) and tightly surrounds the edge of the cheese (*cf*. Figure 1 for a further illustration).

## Claims

1. A method for foil-ripening a cheese selected from the group consisting of Gouda, Edam, Tilsit, Gruyere, Cheddar, Emmental and Maasdam comprising:
a. providing a cheese having an edge, a first face and a second face;
b. packaging said cheese in a closed cheese-ripening foil having a water vapour transmission rate of at least 5 g/(m².24 hours) at 12 °C and 85% relative humidity; and
c. ripening this foil-packaged cheese in the presence of a frame which surrounds at least part of the edge of said cheese, wherein during ripening moisture is allowed to evaporate from said cheese,
wherein the cheese has a fat content of 30 wt.% or less relative to the dry weight of the cheese.

2. The method according to claim 1 where the cheese is Gouda cheese.

3. The method according to claim 1, wherein the water vapour transmission rate of the cheese-ripening foil is at least 10 g/(m².24 hours), more preferably at least 15 g/(m².24 hours) at 12 °C and 85% relative humidity.

4. The method according to any one of claims 1-3, wherein the water vapour transmission rate of the cheese-ripening foil is at most 300 g/(m².24 hours), more preferably at most 200 g/(m².24 hours), more preferably at most 150 g/(m².24 hours) at 12 °C and 85% relative humidity.

5. The method according to any one of the preceding claims, wherein during ripening in (c.) the total amount of moisture which is allowed to evaporate from the foil-packaged cheese is 0.5 - 20 wt.%, more preferably 1-15 wt.% relative to the weight of the foil-packaged cheese provided in (b.).

6. The method according to any one of the preceding claims, wherein after the foil-packaged cheese has ripened for a desired time, the frame and/or the cheese-ripening foil is removed.

7. The method according to any one of claim 5-6, wherein the cheese thus obtained is further packaged in an essentially gas- and water-impermeable foil or is provided with a layer of a cheese coating or cheese wax.

8. The method according to any one of the preceding claims, wherein the frame is further in contact with part of the first face and/or part of the second face of the cheese.

9. The method according to any one of the preceding claims, wherein the frame is made of one or more materials selected from the group consisting of metal, plastic, paper, cardboard and wood.

10. The method according to any one of the preceding claims, wherein the frame comprises elements which are connectable by fastening means, more preferably by releasable fastening means.

11. The method according to any one of the preceding claims, wherein during ripening, the foil-packaged cheese is allowed to rest on any one of its first or second face, and wherein during ripening, the foil-packaged cheese is turned upside-down at least once.

12. The method according to any one of the preceding claims, wherein the ripened foil-ripened cheese obtained in (c.) comprises a drying rind which is visibly present near one or both of its faces and/or the edge.

13. The method according to any one of the preceding claims, wherein the cheese further comprises a strain of *Lactobacillus helveticus* or propionibacteria.

14. A foil-packaged cheese selected from the group consisting of Gouda, Edam, Tilsit, Gruyere, Cheddar, Emmental and Maasdam at least partially surrounded by a frame, obtainable according to the method of any one of claims 1-5, 7-13, wherein the cheese has a fat content of 30 wt.% or less relative to the dry weight of the cheese.

15. The foil-packaged cheese according to claim 14, wherein the cheese is a Gouda cheese.

## Patentansprüche

1. Verfahren zur Folien-Reifung eines Käses, welcher aus der Gruppe bestehend aus Gouda, Edamer, Tilsiter, Gruyere, Cheddar, Emmentaler und Maasdamer ausgewählt ist, welches umfasst:
a. Bereitstellen eines Käses, welcher einen Rand, eine erste Seitenfläche und eine zweite Seitenfläche hat;
b. Verpacken besagten Käses in eine geschlossene Käse-Reifungsfolie, welche eine Wasserdampf-Transmissionsrate von mindestens 5 g/(m².24 Stunden) bei 12°C und 85% relativer Feuchtigkeit hat; und
c. Reifen des folienverpackten Käses in der Gegenwart eines Rahmens, welcher mindestens einen Teil des Randes des Käses umrandet, wobei Feuchtigkeit während der Reifung des besagten Käses verdampfen kann,
wobei der Käse einen Fettgehalt von 30 Gew.-% oder weniger in Bezug auf das Trockengewicht des Käses aufweist.

2. Verfahren nach Anspruch 1, wobei der Käse ein Gouda-Käse ist.

3. Verfahren nach Anspruch 1, wobei die Wasserdampf-Transmissionsrate der Käse-Reifungsfolie mindestens 10 g/(m².24 Stunden) ist, bevorzugter mindestens 15 g/(m².24 Stunden) bei 12°C und 85% relativer Feuchtigkeit.

4. Verfahren nach einem der Ansprüche 1-3, wobei die Wasserdampf-Transmissionsrate der Käse-Reifungsfolie höchstens 300 g/(m².24Stunden) ist, bevorzugt höchstens 200 g/(m².24 Stunden), bevorzugter höchstens 150 g/(m².24 Stunden) bei 12°C und 85% relativer Feuchtigkeit.

5. Verfahren nach einem der vorangehenden Ansprüche, wobei während der Reifung in (c.) die gesamte zulässige Menge an Feuchtigkeit, welche aus dem folienverpackten Käse verdampfen kann, 0,5 - 20 Gew.%, bevorzugt 1-15 Gew.%, in Bezug auf das Gewicht des in (b) bereitgestellten folienverpackten Käses, ist.

6. Verfahren nach einem der vorangehenden Ansprüche , wobei, nachdem der folienverpackte Käse für eine gewünschte Zeit gereift ist, der Rahmen und/oder die Käse-Reifungsfolie entfernt wird.

7. Verfahren nach einem der Ansprüche 5-6, wobei der so erhaltene Käse in einer im Wesentlichen gas- und wasserundurchlässigen Folie weiter verpackt wird oder mit einer Schicht einer Käsebeschichtung oder eines Käsewaches bereitgestellt wird.

8. Verfahren nach einem der vorangehenden Ansprüche, wobei der Rahmen weiter in Kontakt mit einem Teil der ersten Seitenfläche und/oder der zweiten Seitenfläche des Käses ist.

9. Verfahren nach einem der vorangehenden Ansprüche, wobei der Rahmen aus einem oder mehreren Materialien hergestellt ist, ausgewählt aus der Gruppe bestehend aus Metall, Plastik, Papier, Pappe und Holz.

10. Verfahren nach einem der vorangehenden Ansprüche, wobei der Rahmen Elemente umfasst, welche durch Schließmittel verbindbar sind, bevorzugt durch lösbare Schließmittel.

11. Verfahren nach einem der vorangehenden Ansprüche, wobei während der Reifung der folienverpackte Käse auf einer seiner ersten oder zweiten Seitenfläche liegen kann, und wobei während der Reifung der Käse mindestens einmal umgedreht wird.

12. Verfahren nach einem der vorangehenden Ansprüche, wobei der in (c.) erhaltene gereifte foliengereifte Käse eine sichtbare Trocknungsrinde umfasst, welche in der Nähe einer oder beider Seitenflächen und/oder dem Rand sichtbar vorhanden ist.

13. Verfahren nach einem der vorangehenden Ansprüche, wobei der Käse ferner einen Stamm von *Lactobacillus helveticus* oder Propionibakterien umfasst.

14. Folienverpackter Käse, ausgewählt aus der Gruppe bestehend aus Gouda, Edamer, Tilsiter, Gruyere, Cheddar, Emmentaler und Maasdamer, welcher mindestens teilweise von einem Rahmen umgeben ist, erhältlich nach dem Verfahren nach einem der Ansprüche 1-5, 7-13, wobei der Käse einen Fettgehalt von 30 Gew.% oder weniger in Bezug auf das Trockengewicht des Käses hat.

15. Folienverpackter Käse nach Anspruch 14, wobei der Käse ein Gouda-Käse ist.

## Revendications

1. Procédé de maturation sous feuille d'un fromage choisi dans le groupe constitué du Gouda, de l'Edam, du Tilsit, du Gruyère, du Cheddar, de l'Emmental et du Maasdam comprenant :
a. une fourniture d'un fromage ayant un bord, une première face et une seconde face ;
b. un emballage dudit fromage dans une feuille de maturation de fromage fermée ayant un taux de transmission de vapeur d'eau d'au moins 5 g/(m².24 heures) à 12°C et 85 % d'hygrométrie relative ; et
c. une maturation de ce fromage emballé sous feuille en présence d'un cadre qui entoure au moins en partie le bord dudit fromage, dans lequel au cours de la maturation l'humidité est autorisée à s'évaporer dudit fromage,
dans lequel le fromage a une teneur en matière grasse de 30 % en poids ou moins par rapport au poids sec du fromage.

2. Procédé selon la revendication 1, où le fromage est du Gouda.

3. Procédé selon la revendication 1, dans lequel le taux de transmission de vapeur d'eau de la feuille de maturation de fromage est d'au moins 10 g/(m².24 heures), plus préférentiellement d'au moins 15 g/(m².24 heures) à 12°C et 85 % d'hygrométrie relative.

4. Procédé selon l'une quelconques des revendications 1-3, dans lequel le taux de transmission de vapeur d'eau de la feuille de maturation de fromage est au plus 300 g/(m².24 heures), plus préférentiellement au plus 200 g/(m².24 heures), plus préférentiellement au plus 150 g/(m².24 heures) à 12°C et 85 % d'hygrométrie relative.

5. Procédé selon l'une quelconque des revendications précédentes, dans lequel au cours de la maturation dans (c.) la quantité totale d'humidité qui est autorisée à s'évaporer du fromage emballé sous feuille est de 0,5 à 20 % en poids, plus préférentiellement de 1 à 15 % en poids par rapport au poids du fromage emballé sous feuille fourni dans (b.).

6. Procédé selon l'une quelconque des revendications précédentes, dans lequel après que le fromage emballé sous feuille a subi une maturation pendant une durée souhaitée, on enlève le cadre et/ou la feuille de maturation de fromage.

7. Procédé selon l'une quelconque des revendications 5 et 6, dans lequel le fromage ainsi obtenu est ensuite emballé dans une feuille essentiellement imperméable au gaz et à l'eau ou est fourni avec une couche d'enrobage de fromage ou de cire à fromage.

8. Procédé selon l'une quelconque des revendications précédentes, dans lequel le cadre est par ailleurs en contact avec la partie de la première face et/ou la partie de la seconde face du fromage.

9. Procédé selon l'une quelconque des revendications précédentes, dans lequel le cadre est formé d'un ou plusieurs matériaux choisis dans le groupe constitué du métal, du plastique, du papier, du carton et du bois.

10. Procédé selon l'une quelconque des revendications précédentes, dans lequel le cadre comprend des éléments qui peuvent être reliés par des moyens de fixation, plus préférentiellement par des moyens de fixation détachables.

11. Procédé selon l'une quelconque des revendications précédentes, dans lequel au cours de la maturation, on laisse reposer le fromage emballé sous feuille sur l'une quelconque de sa première ou seconde face, et dans lequel au cours de la maturation, le fromage emballé sous feuille est retourné au moins une fois.

12. Procédé l'une quelconque des revendications précédentes, dans lequel le fromage ayant subi une maturation sous feuille obtenu dans (c.) comprend une croûte de séchage visiblement présente au voisinage de l'une ou deux de ses faces et/ou du bord.

13. Procédé l'une quelconque des revendications précédentes, dans lequel le fromage comprend en outre une souche de *Lactobacillus helveticus* ou propionibacterium.

14. Fromage emballé sous feuille choisi dans le groupe constitué du Gouda, de l'Edam, du Tilsit, du Gruyère, du Cheddar, de l'Emmental et du Maasdam au moins partiellement entouré d'un cadre, pouvant être obtenu au moyen du procédé selon l'une quelconque des revendications 1 à 5, 7 à 13, dans lequel le fromage a une teneur en matière grasse de 30 % en poids ou moins par rapport au poids sec du fromage.

15. Fromage emballé sous feuille selon la revendication 14, dans lequel le fromage est du Gouda.
